# EUROPEAN PATENT SPECIFICATION

(11) **EP 0 628 244 B1**
(45) Date of publication and mention of the grant of the patent: **12.05.1999**
(21) Application number: 94201622.1
(22) Date of filing: 08.06.1994
(51) Int. Cl.: A01J 9/00, A01J 7/00

(54) **A method of milking animals, as well as a construction for applying same**
Verfahren zum Melken von Tieren und Vorrichtung zu deren Anwendung
Méthode de traite d'animaux et dispositif utilisant ladite méthode

(30) Priority: 10.06.1993 NL 9300997
(43) Date of publication of application: 14.12.1994
(73) Proprietor: MAASLAND N.V., 3155 PD Maasland (NL)
(72) Inventor: van den Berg, Karel, NL-2971 BR Bleskensgraaf (NL)
(74) Representative: Corten, Maurice Jean F.M.

(56) References cited:
- EP-A- 0 385 539
- EP-A- 0 399 604
- FR-A- 2 139 360

## Description

The present invention relates to a method of milking animals, in which the milk obtained from different animals after having been separated according to quality and/or composition is collected in different storage containers. The milk obtained with the aid of teat cups connected to the teats of an animal to be milked is usually transferred to a milk tank via a milk meter. In document EP-A-0 399 604 it is checked whether the milk is obtained from an animal of which one or more udder quarters suffer from an illness; this may be established by means of a milk conductivity sensor to be included in the milk meter or in the supply lines from the individual teat cups to said milk meter. The infected milk is not to be transferred to the milk tank, but to a waste milk tank via a valve incorporated in the line between the milk meter and the milk tank. The suitable milk is collected in the milk tank, which is usually emptied a few times a week. A dairy factory, collecting the milk from the milk tanks of the farmers, checks this milk and, if necessary, might put it to different uses, e.g. for consumption, or for animal food, etc.

It is an object of the invention to enable a determination of the intended use of the milk at an early stage. According to the invention, in the method of milking animals, the quality and/or composition is based on the albumen content, or on the course of the lactation period. In other words, already immediately after milking, a distinction in the milk obtained is made and the milk is collected separately. In this situation, the milk obtained from different animals can be collected in different storage containers, whilst it is likewise possible to collect the milk obtained from one individual animal in different storage containers, i.e. the milk can be separated during the initial stage of the milking operation and that during the further course thereof. The quality and the composition of the milk of different animals can be updated in a computer and be coupled to an animal identification system which is customary to the automatic milking of animals. The milk obtained from animals, of which it is known that it has a higher albumen content or a higher fat content, can be collected directly in separate storage containers. Since the computer used in the automatic milking procedure also updates the data which are relevant to the milking of the animals, in particular the lactation period of the animals, it is also possible to collect the milk obtained from an animal during a lactation period in different rooms. Furthermore, it is possible to collect the milk in different storage containers in dependence on the somatic cell count of the milk. It is possible that there are several criteria for collecting the milk separately. These criteria may already be known in advance and have been recorded in the computer, in which the required data of the animals are updated; it is, however, alternatively possible to establish these criteria directly during milking. Thus, it is possible to provide the construction, in which the method according to the invention is applied, with a measuring element for establishing during the milking procedure itself the albumen content of the milk obtained; it is likewise possible to provide a measuring element for establishing the fat content or the somatic cell count thereof. In addition, the construction may include a sensor measuring unit for establishing the colour of the milk obtained, more specifically for checking the milk for blood, or a sensor measuring unit for establishing the light absorption in the milk obtained, more specifically for checking whether the milk is cloudy or has been contaminated.

The invention does not only relate to a method but also to a construction for applying this method; the construction then comprises a milking machine with teat cups which are connectable to the teats of an animal to be milked and a milk meter, via which the milk is transferred from the teat cups to means for collecting same, whereby these means comprise a plurality of storage containers for the separate collection of milk of different grades and/or compositions. According to the invention, the construction is provided with a measuring unit with a measuring element for establishing during the milking procedure the albumen content or the fat content or the somatic cell count or the colour, or the light absorption of the milk or several of these elements. In a particular construction, these means for collecting milk can then be constituted by a milk tank which is subdivided into compartments. In its simplest embodiment, the milk tank includes two compartments. To enable a separate collection, the construction includes a divider element, which divider element, for the case in which only one milk meter is present, is arranged between this milk meter and the milk collecting means. Via this divider element, the milk is guided from the milk meter to one of the storage containers of the milk collecting means. In case several milk meters are present, each of which is connected to one of the rooms of the milk collecting means, then the divider element may be arranged between the teat cups and the milk meter. This renders it possible for the milk to be transferred from the teat cups to one of the milk meters and from there to one of the milk tank compartments connected to this milk meter. The use of measuring elements and sensor measuring units, as mentioned in the foregoing, is particularly advantageous when the milking machine is constructed as an automatically operating system which cooperates with an animal identification system, whilst in the computer of the automatic milking machine and/or of the animal identification system are updated the data relevant to the quality and/or composition of the milk obtained from each animal individually, on the basis of which data the computer supplies the control signals for the divider element. An advantageous embodiment of the construction is also obtained when the milking machine includes a robot for automatically connecting the teat cups to the teats of an animal to be milked. Such a robotization can provide a system which operates automatically in such a manner that any interference on the part of the farmer during the milking operation, during which, in addition, the milk can be collected separately, is not required anymore.

For a better understanding of the invention and to show how the same may be carried into effect, reference will now be made, by way of example, to the accompanying drawings, in which:
Figure 1 is a schematic representation of an array in which the milking machine comprises only one milk meter, while milk transferred from the said milk meter can be collected in two compartments, and
Figure 2 shows an embodiment in accordance with the invention, in which the milking machine comprises two milk meters, each of which is connected to a compartment of the milk tank, whilst the milk obtained by means of the teat cups is transferred separately to the two milk meters.

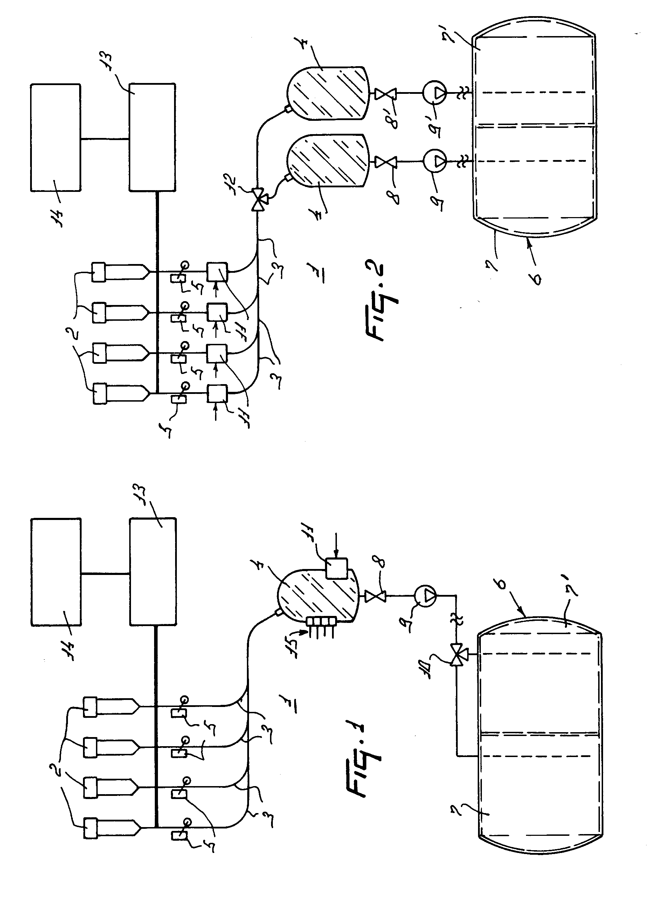

Figure 1 is a schematic representation of a milking machine 1, which milking machine 1 comprises four teat cups 2 to be connected to the teats of an animal te be milked, from which teat cups 2 the milk tubes 3 are passed to a milk meter 4 constituted by a collecting glass. The milk tubes 3 are provided with shut-off means 5, each of which is used to shut-off a milk tube by pinching or otherwise as soon as the vacuum in a relevant teat cup 2 has fallen off. The teat cups 2 can be connected to the teats of an animal to be milked with the aid of a milking robot 13, in which case this robot 13 has a robot arm that serves as a carrier for the teat cups 2. The milking robot 13 is controlled from a computer 14. From the collecting glass 4, the milk obtained is transferred to a milk tank 6. The milk tank 6 is divided into two compartments 7 and 7'. The flow-out aperture of the collecting glass 4 is connected to a pump 9 via a cock 8. Using the pump 9, the milk is pumped into one of the compartments 7, 7' via a three-way valve 10. A measuring unit 11 may be incorporated in the collecting glass 4, which measuring unit 11 may have a measuring element for establishing the albumen content of the milk obtained, or a measuring element for establishing the fat content or the somatic cell count thereof, or a sensor measuring unit for establishing the colour or the light absorption thereof. Consequently, the milk obtained is immediately checked in the collecting glass 4 as to its albumen or fat content, as to the somatic cell count and as to the presence of traces of blood or contaminations therein. The results of these measurements can be reported to the computer 14, which records and updates these data for each animal in connection with decisions to be made for subsequent milking runs as regards the destination of the milk. The computer 14 supplies a control signal for the three-way valve 10, so that the milk is collected from the collecting glass 4 either in compartment 7 or in compartment 7'. It is of course alternatively possible to derive directly from the results of the measurements effected in the measuring unit 11 a signal, by means of which the three-way valve can be controlled.

When the three-way valve 10 is switched over, the milk present in the relatively long line between the pump 9 and the three-way valve 10 must be taken into account. When a quantity of milk V, coming from the animal which was milked last, is present in the collecting glass 4 and this quantity of milk has been removed by the pump 9 from the collecting glass 4, whilst the compartment 7 is connected by means of the three-way valve 10 to the line leading away from the pump 9, then a quantity of milk v will remain in the line (where v is the volume of the line leading from the pump 9) and a quantity of milk V-v will arrive in the compartment 7. When subsequently the collecting glass 4 is filled again with milk of a different quality and/or composition obtained thereafter, more particularly in a quantity V', then, when the pump 9 is to pump this quantity V' away from the collecting glass 4, the three-way valve 10 will have to keep the line leading from the pump for a further period of time in the state in which it is still connected to the compartment 7, until the volume of milk v in the line leading from the pump has arrived in the compartment 7. The milk level in the collecting glass 4 has then fallen by a value corresponding to this volume v. By noting this decrease in level, it is also possible to determine the instant at which the three-way valve 10 must be switched, in order that the compartment 7' is connected to the line leading from the pump 9. After the three-way valve 10 has been switched over and the collecting glass 4 has been emptied by means of the pump, a volume of milk v again stays behind in the line leading from the pump 9, whilst a volume of milk V'-v arrives in the compartment 7'. After the milk which is thereafter collected in the collecting glass 4 has been pumped off, a volume of milk v is then again first transferred to the compartment 7' and thereafter, after switching of the three-way valve 10 (should this be desired in view of the quality and/or composition of the milk then obtained), milk is again transferred to the compartment 7, etc. The instant at which the three-way valve 10 is switched over is determined by a constant change in the level of the volume of milk each time collected in the collecting glass 4, when this milk is pumped off. This change in level can be determined with the aid of sensors arranged in e.g. the vertical direction at the interior side of the collecting glass. These sensors 15 report the change in level by applying an electric signal to the computer 14 controlling the three-way valve 10.

In the embodiment as shown in Figure 2, there are two collecting glasses 4 and 4', whilst the milk obtained by means of the teat cups 2 is transferred via the milk tubes 3 to a three-way valve 12, the milk being transferred this this three-way valve 12 and the individual milk tubes 3 either to the collecting glass 4 or to the collecting glass 4'. It is course alternatively possible to first join the four milk tubes together in a milk claw and to lead the output tube of the milk claw to one single three-way valve, from which three-way valve one single tube then leads to the two collecting glasses 4 and 4'. Via cocks 8 and 8' behind the flow-out aperture of the relevant collecting glasses, the milk is transferred with the aid of the respective pumps 9 and 9' from the relevant collecting glasses to the corresponding compartments 7 and 7' of the milk tank. In this embodiment, the decision to transfer the milk to either compartment 7 or to compartment 7' has already been taken before the milk is collected in a collecting glass. This situation can, for example, be met when each of the milk tubes 3 is provided with a measuring unit 11 of the same type as the measuring unit 11 in Figure 1. When there is used a milking claw in which the tubes of the teat cups 2 are joined together, then the measuring unit 11 may alternatively be arranged between the milking claw and the three-way valve 12. In all further respects, the manner in which the three-way valve 12 is controlled is identical to that in which the three-way valve 10 in Figure 1 is controlled. Instead of the use of specific measuring elements and sensor measuring units for the determination of the quality and/or composition of the milk during the milking operation proper, it is alternatively possible to update these data in the computer 14 of the system, so that it is already known in advance for the individual animals whether the milk obtained from them must be collected in a predetermined compartment. This is more specifically possible when the decision to collect the milk in one of the two compartments is determined on the basis of the albumen or fat content of the milk to be obtained from a relevant animal. So far mention has only been made of the possibility of collecting the milk separately in two compartments in dependence on the albumen content, the fat content or the somatic cell count, or in dependence on the extent to which blood traces or other types of contaminations occur in the milk. By using several compartments or several separate collecting rooms, it is of course possible to utilize several of the said criteria simultaneously.

The construction described here may form part of a fully automated milking and cleansing system, in which use can be made of an automatic system for allowing the animals, optionally on a selective basis, access to the milking parlour, an animal identification system, a teat cleaning system, a robot for automatically connecting the teat cups, an automatically proceding milking procedure with built-in checks on the progress of the procedure, an automatic feeding system, etc. The entire system is then controlled by a computer, so that of course use can be made of the computer 14 for controlling the elements of the construction, in sofar it has been described here, more specifically the cocks and the pumps.

The invention is not limited to the embodiment described hereinbefore and as shown in the drawings, but also comprises all types of modifications, of course falling within the scope of the accompanying claims.

## Claims

1. A method of milking animals, in which the milk obtained from different animals is collected in different storage containers after having been separated according to quality and/or composition, characterized in that the quality and/or composition is based on the albumen content, or on the course of the lactation period.

2. A method as claimed in claim 1, characterized in that the milk obtained, depending on the fat content, is collected in different storage containers, or whether the milk is obtained during the initial stage of the milking operation or during the further course thereof or in dependence on the somatic cell count of the milk.

3. A construction for applying the method as claimed in any one of the preceding claims, comprising a milking machine (1) with teat cups (2) which are connectable to the teats of an animal to be milked and a milk meter (4), via which the milk is transferred from the teat cups (2) to means (6) for collecting same, whereby these means comprise a plurality of storage containers (7, 7') for the separate collection of milk of a different quality and/or composition, characterized in that the construction is provided with a measuring unit (11) with a measuring element (11) for establishing during the milking procedure the albumen content or the fat content or the somatic cell count or the colour, or the light absorption of the milk or several of these elements.

4. A construction as claimed in claim 3, characterized in that the means (6) are constituted by a milk tank which is subdivided into compartments (7, 7').

5. A construction as claimed in claim 4, characterized in that the milk tank (6) includes two compartments (7, 7').

6. A construction as claimed in any one of claims 3 to 5, characterized in that, arranged between the milk meter (4) and the milk collecting means (7, 7'), there is a divider element (10) for guiding the milk from the milk meter (4) to one of the storage containers (7, 7') of the milk collecting means (6).

7. A construction as claimed in any one of claims 3 to 5, characterized in that several milk meters (4) are present, each of which is connected to one of the storage containers (7, 7') of the milk collecting means (6), whilst furthermore between the teat cups (2) and the milk meters (4) there is arranged a divider element (12) for guiding the milk from the teat cups (2) to one of the milk meters (4).

8. A construction as claimed in claim 6 or 7, characterized in that the milking machine (1) operates automatically and co-operates with an animal identification system, whilst in the computer of the automatic milking machine (1) and/or of the animal identification system are updated the data relevant to the quality and/or composition of the milk obtained from each animal individually, on the basis of which data the computer supplies the control signals for the divider element.

9. A construction as claimed in any one of claims 3 to 8, characterized in that the milking machine (1) includes a robot for automatically connecting the teat cups (2) to the teats of an animal to be milked.

10. A construction as claimed in any one of claims 3 to 9, characterized in that the sensor measuring element for establishing the light absorption in the milk obtained, can check cloudiness of the milk.

11. A construction as claimed in any one of the preceding claims, characterized in that one or more measuring elements and/or one or more sensor measuring units are arranged in the milk meter (4).

12. A construction as claimed in any one of claims 3 to 10, characterized in that one or more measuring elements and/or one or more sensor measuring units are arranged in a line (3) constituting the connection between a teat cup (2) and the milk meter (4).

## Patentansprüche

1. Verfahren zum Melken von Tieren, wobei die von unterschiedlichen Tieren gewonnene Milch in unterschiedlichen Sammelbehältern aufgefangen wird, nachdem sie entsprechend der Qualität und/oder der Zusammensetzung getrennt worden ist,
dadurch gekennzeichnet, daß die Qualität und/oder die Zusammensetzung auf dem Eiweißgehalt oder dem Verlauf der Säugeperiode basiert.

2. Verfahren nach Anspruch 1,
dadurch gekennzeichnet, daß die gewonnene Milch entsprechend dem Fettgehalt oder in Abhängigkeit davon, ob die Milch in der Anfangsphase des Melkvorganges oder während des weiteren Verlaufes desselben gewonnen wird, oder entsprechend der Zellzahl der Milch in unterschiedlichen Sammelbehältern aufgefangen wird.

3. Vorrichtung zur Durchführung des Verfahrens nach einem der vorhergehenden Ansprüche,
mit einer Melkmaschine (1) mit Zitzenbechern (2), die an die Zitzen eines zu melkenden Tieres anschließbar sind, sowie mit einem Milchmengenmesser (4), über den die Milch von den Zitzenbechern (2) zu einer Vorrichtung (6) zur Aufnahme derselben geleitet wird, wobei diese Vorrichtung mehrere Sammelbehälter (7, 7') zur getrennten Aufnahme von Milch unterschiedlicher Qualität und/oder Zusammensetzung aufweist,
dadurch gekennzeichnet, daß die Vorrichtung eine Meßeinheit (11) mit einem Meßelement (11) aufweist, um während des Melkvorganges den Eiweißgehalt oder den Fettgehalt oder die Zellzahl oder die Farbe oder die Lichtabsorption der Milch oder mehrere dieser Werte zu ermitteln.

4. Vorrichtung nach Anspruch 3,
dadurch gekennzeichnet, daß die Vorrichtung (6) durch einen Milchtank gebildet ist, der in Kammern (7, 7') unterteilt ist.

5. Vorrichtung nach Anspruch 4,
dadurch gekennzeichnet, daß der Milchtank (6) zwei Kammern (7, 7') aufweist.

6. Vorrichtung nach einem der Ansprüche 3 bis 5,
dadurch gekennzeichnet, daß zwischen dem Milchmengenmesser (4) und den Sammelbehältern (7, 7') ein Verteilerelement (10) angeordnet ist, um die Milch vom Milchmengenmesser (4) zu einem der Sammelbehälter (7, 7') der Milchaufnahmevorrichtung (6) zu leiten.

7. Vorrichtung nach einem der Ansprüche 3 bis 5,
dadurch gekennzeichnet, daß mehrere Milchmengenmesser (4) vorhanden sind, die jeweils mit einem der Sammelbehälter (7, 7') der Milchaufnahmevorrichtung (6) verbunden sind, wobei ferner zwischen den Zitzenbechern (2) und den Milchmengenmessern (4) ein Verteilerelement (12) angeordnet ist, um die Milch von den Zitzenbechern (2) zu einem der Milchmengenmesser (4) zu leiten.

8. Vorrichtung nach Anspruch 6 oder 7,
dadurch gekennzeichnet, daß die Melkmaschine (1) automatisch arbeitet und mit einem Tieridentifizierungssystem zusammenwirkt, wobei in dem Computer der automatischen Melkmaschine (1) und/oder des Tieridentifizierungssystems die Daten bezüglich der Qualität und/oder der Zusammensetzung der von jedem Tier einzeln gewonnenen Milch aktualisiert werden, und wobei der Computer aufgrund dieser Daten die Steuersignale für das Verteilerelement liefert.

9. Vorrichtung nach einem der Ansprüche 3 bis 8,
dadurch gekennzeichnet, daß die Melkmaschine (1) einen Roboter zum automatischen Anschließen der Zitzenbecher (2) an die Zitzen eines zu melkenden Tieres aufweist.

10. Vorrichtung nach einem der Ansprüche 3 bis 9,
dadurch gekennzeichnet, daß von dem Sensor-Meßelement zur Ermittlung der Lichtabsorption in der gewonnenen Milch die Trübung der Milch zu ermitteln ist.

11. Vorrichtung nach einem der vorhergehenden Ansprüche,
dadurch gekennzeichnet, daß ein oder mehrere Meßelemente und/oder eine oder mehrere Sensor-Meßeinheiten im Milchmengenmesser (4) angeordnet sind.

12. Vorrichtung nach einem der Ansprüche 3 bis 10,
dadurch gekennzeichnet, daß ein oder mehrere Meßelemente und/oder eine oder mehrere Sensor-Meßeinheiten in einer Leitung (3) angeordnet sind, die die Verbindung zwischen einem Zitzenbecher (2) und dem Milchmengenmesser (4) bildet.

## Revendications

1. Procédé de traite d'animaux, dans lequel le lait obtenu d'animaux différents est recueilli dans des récipients de stockage différents après avoir été séparé selon sa qualité et/ou sa composition, caractérisé en ce que la qualité et/ou la composition est basée sur la teneur en albumine, ou sur le déroulement de la période de lactation.

2. Procédé selon la revendication 1, caractérisé en ce que le lait obtenu est recueilli, en fonction de la teneur en matière grasse, dans des récipients de stockage différents, ou selon que le lait est obtenu pendant la phase initiale de l'opération de traite ou pendant la suite du déroulement de la traite, ou en fonction du nombre de cellules somatiques du lait.

3. Dispositif de mise en oeuvre du procédé suivant l'une quelconque des revendications précédentes, comprenant une machine à traire (1) avec des godets de trayons (2) qui peuvent être reliés aux trayons d'un animal à traire, et un compteur de lait (4) à travers lequel le lait est transféré à partir des godets de trayons (2) vers des moyens (6) pour recueillir le lait, ces moyens comprenant une pluralité de récipients de stockage (7, 7') pour la collecte séparée de lait de qualité différente et/ou de composition différente, caractérisé en ce que le dispositif est muni d'une unité mesureuse (11) pourvu d'un élément de mesurage (11) pour déterminer pendant la procédure de traite la teneur en albumine ou la teneur en matière grasse ou le nombre de cellules somatiques ou la couleur ou l'absorption de lumière du lait, ou plusieurs de ces éléments.

4. Dispositif selon la revendication 3, caractérisé en ce que les moyens (6) sont constitués par un réservoir à lait qui est subdivisé en compartiments (7, 7').

5. Dispositif selon la revendication 4, caractérisé en ce que le réservoir à lait (6) comporte deux compartiments (7, 7').

6. Dispositif selon l'une quelconque des revendications 3 à 5, caractérisé en ce qu'il y a, disposé entre le compteur de lait (4) et les moyens de collecte du lait (7, 7') un élément diviseur (10) pour guider le lait à partir du compteur de lait (4) jusqu'à un des récipients de stockage (7, 7') des moyens collecteurs de lait (6).

7. Dispositif selon l'une quelconque des revendications 3 à 5, caractérisé en ce que plusieurs compteurs de lait (4) sont présents, chacun d'eux étant relié à un des récipients de stockage (7, 7') des moyens collecteurs de lait (6),tandis qu'en outre il y a, disposé entre les godets de trayons (2) et les compteur de lait (4) un élément diviseur (12) pour guider le lait à partir des godets de trayon (2) jusqu'à un des compteurs de lait (4).

8. Dispositif selon la revendication 6 ou 7, caractérisé en ce que la machine à traire (1) fonctionne automatiquement et coopère avec un système d'identification des animaux, tandis que dans l'ordinateur de la machine à traire automatique (1) et/ou du système d'identification des animaux a lieu la mise à jour des données concernant la qualité et/ou la composition du lait obtenu de chaque animal individuellement, l'ordinateur fournissant, en fonction de ces données, les signaux de commande pour l'élément diviseur.

9. Dispositif selon l'une quelconque des revendications 3 à 8, caractérisé en ce que la machine à traire (1) comporte un robot pour relier automatiquement les godets de trayons (2) aux trayons de l'animal à traire.

10. Dispositif selon l'une quelconque des revendications 3 à 9, caractérisé en ce que l'élément mesureur à capteur pour déterminer l'absorption de lumière dans le lait obtenu peut mesurer la nébulosité du lait.

11. Dispositif selon l'une quelconque des revendications précédentes, caractérisé en ce qu'un ou plusieurs éléments mesureurs et/ou une ou plusieurs unités mesureuses à capteurs sont disposés dans le compteur de lait (4).

12. Dispositif selon l'une quelconque des revendications 3 à 10, caractérisé en ce qu'un ou plusieurs éléments mesureurs et/ou une ou plusieurs unités mesureuses à capteurs sont disposés dans un tuyau (3) constituant la liaison entre un godet de trayon (2) et le compteur de lait (4).
